# FASCICULE DE BREVET EUROPEEN

(11) **EP 0 619 660 B1**
(45) Date de publication et mention de la délivrance du brevet: **10.04.2002**
(21) Numéro de dépôt: 94400739.2
(22) Date de dépôt: 05.04.1994
(51) Int. Cl.: H04L 9/32, G07F 7/10

(54) **Procédé de signature d'un fichier informatique et dispositif pour la mise en oeuvre**
Verfahren zur Dateiunterschrift und Einrichtung für seine Durchführung
Method of file signature and device for performing the method

(30) Priorité: 06.04.1993 FR 9304073
(43) Date de publication de la demande: 12.10.1994
(73) Titulaire: BULL CP8, 78430 Louveciennes (FR)
(72) Inventeur: Ugon, Michel, F-78310 Maurepas (FR)
(74) Mandataire: Corlu, Bernard

(56) Documents cités:
- EP-A- 0 077 238
- EP-A- 0 281 225
- IEEE INFOCOM '92 PROCEEDINGS, FLORENCE IT, IEEE NEW YORK US pages 2045 - 2054 Y. DESMEDT ET AL. 'Multi-receiver/multi-sender network security: efficient authenticated multicast/feedback'
- NTT REVIEW, vol.5, no.1, Janvier 1993, TOKYO JP pages 75 - 81 T. OKAMOTO ET AL. 'On comparison of practical digital signature schemes'

## Description

L'invention est relative à un procédé de signature d'un fichier informatique, encore appelé fichier électronique, à un procédé de vérification de signature, et à un dispositif pour la mise en oeuvre du procédé.

De plus en plus d'informations de toute nature sont échangées entre divers interlocuteurs à l'aide de moyens informatiques: c'est par exemple le cas du courrier électronique, qui consiste à transmettre des fichiers sous forme d'informations binaires.

Selon la nature et/ou l'importance des informations que le fichier contient, il peut être nécessaire que son émetteur, c'est-à-dire son auteur, soit dûment identifié, ou nécessaire de vérifier qu'une personne habilitée a donné son accord ou a validé un tel fichier, et ce de façon encore plus sûre qu'avec un document manuscrit ou dactylographié. En effet, on peut identifier l'auteur d'un document dactylographié ou toute personne habilitée à intervenir sur un tel document par chaque signature manuscrite qui y est attachée.

La notion de validation d'un document apparait dans des circuits de documents qui doivent être signés ou paraphés par une ou plusieurs personnes afin, par exemple, de permettre l'exécution de certaines actions. C'est le cas notamment des actes officiels, des imprimés administratifs ou comptables, de tout document donnant pouvoir à une ou plusieurs personnes, ou de tout document engageant plusieurs personnes (contrats par exemple).

Si, avec un document papier (manuscrit ou dactylographié), il est relativement aisé de présumer de l'identité de son auteur ou des personnes l'ayant validé, car chaque signature est fixée au support papier, il n'en est pas de même avec un fichier électronique. En effet, un fichier électronique est constitué d'une succession de bits ayant la valeur logique "0" ou "1": il en résulte qu'une indication, attachée à un tel fichier, de l'identité de son auteur ou des personnes l'ayant validé, ne suffit pas à prouver que le fichier, tel qu'il se trouve à un instant donné, est en l'état dans lequel il se trouvait lorsque les dites personnes ont signé ou validé.

C'est pourquoi il a été imaginé de signer électroniquement de tels fichiers, en faisant calculer par des circuits de traitement, pour chaque signataire, une signature électronique qui est fonction du contenu du fichier et d'au moins un paramètre propre à un signataire ou à un groupe de signataires, et en associant chaque signature ainsi calculée au fichier. La vérification de l'identité d'un signataire consiste à faire recalculer, par des circuits de traitement, la signature et à comparer cette signature recalculée avec la signature associée.

Un fraudeur, c'est-à-dire une personne non habilitée à signer, ne peut pas modifier un fichier et y associer une signature cohérente puisqu'il ne maîtrise pas le(s) paramètre(s) propre(s) au(x) signataire(s) d'origine. De même, dans un circuit de documents devant être signés par plusieurs personnes, toute modification du fichier, après qu'au moins une personne l'ait déjà signé, a pour conséquence qu'il est impossible de remplacer chaque signature déjà calculée par une signature cohérente.

Un tel procédé de calcul et de vérification de signature est décrit dans le brevet français délivré sous le numéro 2514593, correspondant au brevet des Etats-Unis d'Amérique délivré sous le numéro 4656474 et au brevet européen délivré sous le numéro 077238.

Ce procédé consiste à pourvoir chaque signataire potentiel d'un objet portatif tel qu'une carte à microcalculateur (encore appelée carte à puce), dont la mémoire contient une clé secrète accessible seulement par les circuits de traitement de l'objet. La clé secrète est diversifiée, c'est-à-dire qu'elle est différente d'un objet à l'autre, pour que deux objets différents ne puissent pas signer de la même manière un même message.

L'étape de signature proprement dite consiste à accoupler l'objet à un dispositif de traitement de l'information (il peut s'agir du dispositif dans lequel le fichier est élaboré, et/ou à partir duquel il est transmis vers un autre dispositif), et à signer le fichier en faisant dérouler dans le dispositif et dans l'objet des algorithmes de calcul tels que la signature est fonction de la clé secrète et du contenu du fichier.

Pour éviter que la clé secrète soit divulguée hors de l'objet, soit la signature est entièrement calculée à l'intérieur de l'objet, par ses circuits de traitement, soit un résultat partiel est calculé par l'objet, qui est transmis aux circuits du dispositif de traitement, lesquels terminent le calcul. Soit encore, le dispositif de traitement commence le calcul par exemple, en utilisant un algorithme de compression de données et l'objet calcule la signature proprement dite. La signature, après son calcul, est alors transmise avec le fichier et une information relative à l'identité du signataire.

La vérification consiste à faire recalculer, par des circuits de traitement d'un dispositif approprié, la signature d'un fichier, sans la divulguer, puis à comparer cette signature recalculée avec celle qui était attachée au fichier, et enfin à indiquer seulement le résultat de la comparaison (concordance ou non des signatures). Le recalcul est rendu possible car les circuits de traitement du dispositif de vérification comportent un algorithme qui leur permet tout d'abord de recalculer, sans la divulguer, la clé secrète diversifiée du signataire à partir de l'information relative à son identité qui avait été transmise avec le fichier puis, à partir de cette clé recalculée, de recalculer alors la signature. La clé recalculée n'est pas divulguée à l'extérieur des circuits du dispositif de vérification afin que son caractère secret soit maintenu. La signature recalculée n'est pas divulguée pour éviter qu'un fraudeur qui observerait les opérations de vérification tente d'exploiter les résultats du recalcul à son profit.

Cependant, les procédés de signature connus présentent en particulier l'inconvénient de nécessiter que la totalité du fichier soit prise en compte lors du calcul et de la vérification d'une signature, ce qui peut être gênant pour diverses raisons.

Une première raison, valable quand le fichier doit être signé par une seule personne, ou par plusieurs sans qu'aucune n'ait à y apporter de modifications, tient au fait que, si le fichier est très long, le processus de calcul de signature et de vérification peut prendre un certain temps, ce qui est contradictoire avec les buts de l'informatique.

Or, dans un fichier, il existe des informations que l'on peut dire sensibles, et d'autres qui ne le sont pas. Les informations sensibles sont celles relatives au fond: il peut s'agir de valeurs, lorsque le fichier est un fichier comptable; il peut s'agir de paragraphes particuliers dans un rapport ou une lettre. Les informations non sensibles sont celles relatives à la forme: il s'agit par exemple de textes d'accompagnement, dont la présence enrichit le fichier sans en changer le fond, et dont l'absence ou la modification est donc sans importance.

Une deuxième raison est valable quand plusieurs personnes sont amenées à signer le fichier tout en étant autorisées à en modifier certaines zones ou à y ajouter des informations: dans ce cas, avec les procédés connus, seule la signature du dernier signataire pourra être déclarée authentique, puisque chaque modification ou ajout au fichier a pour conséquence que les paramètres ayant servi à élaborer les signatures précédentes sont modifiés.

Le document EP-A-0 281 225 enseigne par ailleurs un procédé pour permettre à un destinataire d'un message de vérifier que le contenu de celui-ci n'a pas été altéré durant son acheminement, au moyen d'un chiffrement préalable par blocs du message pour produire des codes d'authentification de message M.A.C. connus en eux-mêmes (de l'anglais Message Authentication Codes).

Un premier but de l'invention est de permettre de réduire les temps de calcul et de vérification de signature, comparativement aux procédés de l'art antérieur.

Un second but de l'invention est de permettre qu'un même fichier soit signé par plusieurs personnes tout en étant éventuellement modifié ou en subissant des ajouts après qu'un premier signataire l'ait validé.

Ces buts sont atteints grâce aux caractéristiques de la revendication 1 et 12.

Selon une autre caractéristique, de préférence la donnée propre à un signataire est diversifiée pour que deux signataires différents ne puissent pas signer un même fichier de la même manière. Cette caractéristique permet d'identifier chaque signataire, en le retrouvant par exemple par mise en oeuvre de la méthode décrite dans les brevets susmentionnés. II est néanmoins possible d'utiliser une donnée non diversifiée, c'est-à-dire commune au moins à plusieurs signataires, lorsqu'on désire simplement vérifier que le fichier a été signé par une personne autorisée, sans savoir qui exactement.

Un procédé pour vérifier une signature déterminée d'un fichier calculée conformément à la présente invention est caractérisé en ce qu'il consiste à identifier, grâce au fichier secondaire, chaque partie du fichier signé ayant servi à obtenir la signature considérée, à faire recalculer, par des circuits de traitement, la signature en prenant en compte des paramètres sensés correspondre à ceux utilisés lors du calcul initial, à comparer la signature recalculée à la signature liée, et à indiquer le résultat de la comparaison.

L'invention est particulièrement avantageuse, car tout en conservant la sécurité des procédés de l'art antérieur, elle possède néanmoins une plus grande souplesse et de multiples avantages.

En particulier, dès lors qu'un signataire choisit de signer l'ensemble du fichier, parce qu'il estime que l'ensemble de son contenu est constitué d'informations sensibles, les informations du fichier secondaire lié à la signature correspondante indiqueront que cette signature a été calculée à l'aide de l'ensemble du fichier. Dans ce cas, si un signataire ultérieur modifie le fichier, la signature précédente devient incohérente; par contre il peut soit le signer à son tour, en totalité ou en partie, soit y ajouter des informations et faire alors calculer sa propre signature sur la base de tout ou partie des informations ajoutées et/ou de tout ou partie des informations que le fichier contenait avant qu'il effectue cet ajout.

Le calcul de chaque nouvelle signature entraîne donc la création d'un nouveau fichier secondaire ou d'un nouvel enregistrement dans le fichier secondaire dans lequel cette nouvelle signature est inscrite, avec les informations ayant permis son établissement.

Un autre avantage du procédé est qu'il permet qu'une personne qui doit valider un fichier, après qu'il ait été signé par son auteur, peut signifier son accord sur le contenu de certaines parties seulement. Pour cela, cette personne qui doit valider peut faire prendre en compte, pour le calcul de sa propre signature, seulement les parties du fichier avec lesquelles elle est en accord.

D'autres caractéristiques et avantages de l'invention apparaitront avec la description qui va suivre, faite en regard des figures annexées, sur lesquelles:
- la figure 1 illustre le schéma de principe d'un système préféré pour la mise en oeuvre de l'invention;
- les figures 2 à 7 présentent une disposition préférée de chacun des écrans de dialogue entre les utilisateurs et le système pendant les phases de signature et/ou de vérification.

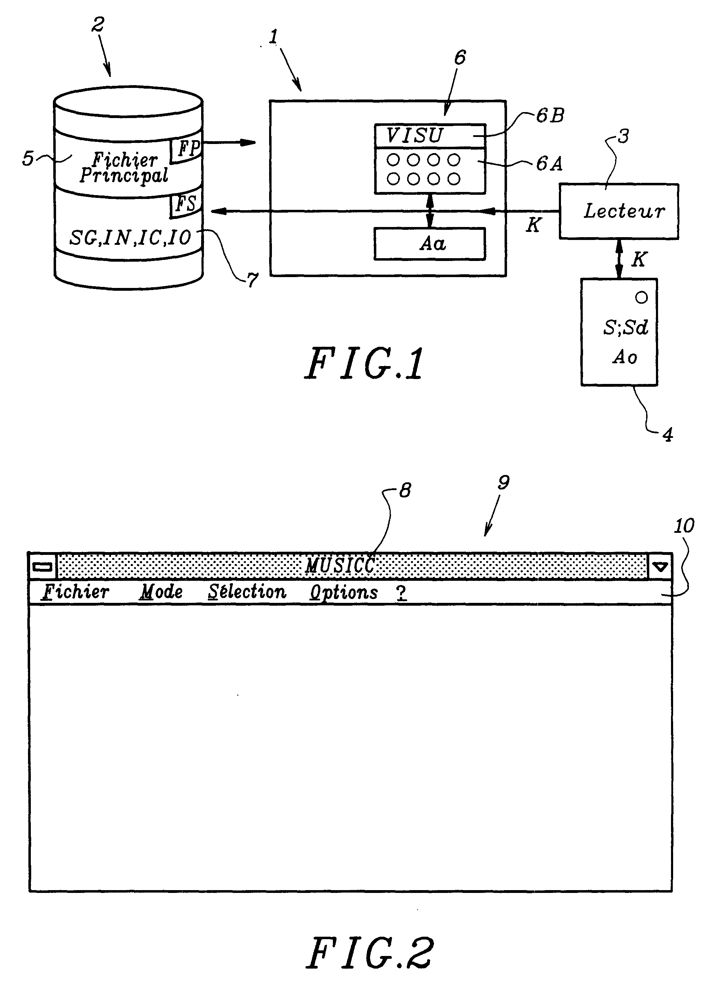

Sur la figure 1, est illustré le schéma de principe d'un dispositif pour la mise en oeuvre préférée de l'invention. Le système représenté peut être utilisé indifféremment pour l'élaboration et/ou la vérification de signature(s).

Le dispositif comporte un appareil 1 de traitement de l'information, tel un ordinateur, capable de traiter des fichiers informatiques. L'appareil comprend, de façon connue, des moyens 2 pour le stockage en masse des données ou des fichiers. Ces moyens 2 peuvent être des disquettes magnétiques, des disques optiques ou tout dispositif de stockage envisageable.

En outre, dans le mode de réalisation préféré, l'appareil est associé à un lecteur 3 d'objet portatif électronique 4 amovible, encore appelé support électronique amovible, tel qu'une carte à microcalculateur, qui contient, de façon connue, des circuits de traitement et une zone de mémoire secrète dans laquelle sont enregistrées des données accessibles seulement par ces circuits de traitement. La zone de mémoire secrète contient au moins une donnée secrète Sd, diversifiée dans chaque carte, c'est-à-dire différente d'une carte à l'autre. Ceci permet qu'un même algorithme de calcul (chiffrement, signature, etc), déroulé dans les deux cartes, et prenant en compte une même donnée d'entrée appliquée aux deux cartes et la donnée diversifiée dans chaque carte, donne des résultats différents d'une carte à l'autre. L'appareil et l'objet constituent donc le dispositif de signature ou de vérification.

Dans une variante, la zone de mémoire secrète du support électronique 4 amovible ne contient pas de donnée diversifiée, mais seulement une donnée secrète S, identique entre toutes les cartes destinées à une application particulière, ou identique entre toutes les cartes qui, destinées à une application particulière, sont remises à des personnes ayant des droits d'accès identiques à cette application. En effet, la diversification est nécessaire lorsqu'une discrimination doit être réalisée entre tout ou partie des utilisateurs.

Ainsi, pour une même application, la donnée secrète peut être non diversifiée entre les signataires potentiels ayant un même rang hiérarchique, c'est-à-dire ayant les mêmes pouvoirs de signature ou les mêmes droits d'accès; Par contre, une diversification existe entre les niveaux hiérarchiques différents. Cette mise en oeuvre suffit dans les circuits de documents dans lesquels il faut simplement vérifier qu'un fichier a été signé par des personnes de rang hiérarchique différent, sans déterminer précisément leur identité.

Il est aussi possible que l'ensemble des signataires potentiels, indépendamment de leur rang, possèdent une donnée secrète identique.

Dans ce cas on peut simplement vérifier que le fichier a été signé par une personne autorisée.

Bien entendu, d'une application informatique à l'autre, il est préférable que les données soient diversifiées.

L'appareil 1 comporte des circuits de traitement capables de dérouler des algorithmes de calcul, en particulier un algorithme Aa de signature d'une partie au moins d'un fichier principal FP contenu dans une partie 5 de sa mémoire de masse 2. Au moment d'être déroulé, l'algorithme Aa est par exemple enregistré dans une zone de mémoire vive de l'appareil 1.

En outre, l'appareil comporte des moyens 6 d'interface et de dialogue avec ses utilisateurs, en particulier un clavier 6A, un écran 6B. Il peut comporter d'autres moyens non illustrés, tels qu'une souris, un dispositif de reconnaissance vocale, etc.

Le rôle du support électronique 4 amovible est de fournir à l'appareil 1, par l'intermédiaire du lecteur 3, une clé K qui est fonction de la donnée secrète, diversifiée Sd ou non S, que sa mémoire enferme. La façon dont cette clé K est élaborée sera expliquée ultérieurement.

La clé K est prise en compte, lors du déroulement de l'algorithme Aa de signature, par les circuits de traitement de l'appareil, afin que la signature SG soit fonction de cette clé K et d'une partie au moins du fichier principal P.

Comme il sera expliqué, la sélection de la ou des parties du fichier principal, qui sera ou seront prises en compte pour le calcul de la signature, peut être effectuée par le signataire ou automatiquement par le système.

Conformément à la présente invention, afin de permettre la vérification de la signature SG, le calcul de chaque signature entraîne la création d'un nouveau fichier secondaire FS, ou d'un nouvel enregistrement dans le fichier secondaire qui contient d'une part cette signature SG et d'autre part des paramètres ou informations qui permettent d'identifier les données qui ont servi à son calcul. Ce fichier secondaire FS est élaboré par l'appareil 1 puis inscrit dans une partie 7 de sa mémoire de masse 2.

En particulier, le fichier secondaire FS contient, parmi ses paramètres constitutifs, des informations IN permettant de retrouver les parties du fichier principal FP ayant servi au calcul de la signature. Il peut s'agir d'informations relatives aux adresses mémoire de ces parties, ou de toute information permettant de retrouver les dites parties dans le fichier principal.

Le fichier secondaire FS, en plus de ces informations IN permettant de retrouver les parties du fichier principal FP ayant servi au calcul de la signature, peut contenir des informations complémentaires IC.

Tout d'abord, il est envisageable que l'algorithme Aa de calcul de signature diffère d'un appareil à l'autre. Il faut se souvenir qu'un même appareil doit pouvoir être utilisé indifféremment pour le calcul ou pour la vérification des signatures. Or, à un moment donné, par exemple en raison de l'évolution des logiciels, il se peut que l'appareil qui a été utilisé pour le calcul de signature ait exploité une version d'un logiciel plus ancienne que l'appareil utilisé pour la vérification exploiterait s'il devait signer; il se peut encore, qu'indépendamment de cette évolution, les deux appareils utilisent des logiciels totalement différents pour le calcul; il peut aussi arriver, dans le cas de signataires multiples, que les signatures d'un même fichier aient été calculées sur des appareils distincts exploitant des logiciels différents. En d'autres termes des dispositifs différents peuvent servir à calculer les signatures.

C'est pourquoi, dans ce cas, parmi les informations complémentaires IC que contient le fichier secondaire FS, se trouvent des données permettant d'identifier le dispositif, c'est-à-dire l'appareil et/ou l'algorithme, qui a été effectivement utilisé lors du calcul de la signature.

Comme il a été indiqué, la clé K est calculée par l'objet portatif 4, à partir de la donnée secrète diversifiée Sd ou non S qu'il contient. Un objet contenant une donnée secrète diversifiée Sd doit être utilisé chaque fois qu'il faut clairement identifier le signataire. Par contre, s'il est juste nécessaire de vérifier que le signataire est une personne autorisée, faisant partie d'un groupe restreint, il n'est pas nécessaire que la donnée secrète soit diversifiée: il suffit seulement qu'elle soit commune à toutes les personnes de ce groupe. Ces principes sont connus dans les procédés antérieurs de signature.

Le calcul de la clé K consiste à faire dérouler, dans l'objet, un algorithme Ao mémorisé dans ses circuits de traitement, et à faire prendre en compte par cet algorithme, d'une part, la donnée secrète diversifiée Sd ou non S que sa mémoire enferme et, d'autre part, une donnée externe E, qui est élaborée dans l'appareil, puis transmise de l'appareil à l'objet, de sorte que la clé K est à la fois fonction de la donnée secrète Sd ou S et de la donnée externe E.

Lorsque la donnée secrète de l'objet est diversifiée, il est nécessaire que l'appareil qui sera utilisé pour la vérification puisse la retrouver, sans la divulguer, afin de recalculer ensuite la clé K.

Ceci peut être fait par exemple en mettant en oeuvre, et en l'adaptant, la méthode divulguée dans l'un ou l'autre des brevets mentionnés au préambule de la présente demande, ou bien encore en mettant en oeuvre tout procédé connu qui permettrait de faire recalculer, sans la divulguer et sans disposer de l'objet ayant servi à la signature, une donnée secrète diversifiée Sd d'un objet.

La méthode divulguée dans l'un ou l'autre des brevets, et adaptée à la présente invention, consiste à associer au fichier principal FP et à la signature SG, en l'inscrivant dans le fichier secondaire FS, parmi les informations complémentaires par exemple, des données IO d'identification de l'objet permettant de faire recalculer ou retrouver sans la divulguer, par des circuits spécifiques de l'appareil de vérification, la donnée diversifiée. Ces données d'identification peuvent par exemple être constituées de p paramètres représentatifs des adresses de p clés élémentaires parmi q clés élémentaires enregistrées clans la zone de mémoire secrète du support, la donnée secrète diversifiée étant alors constituée par la combinaison des informations contenues à ces p adresses.

De plus ainsi qu'il a été évoqué auparavant, l'objet déroule un algorithme Ao. Généralement, cet algorithme est implanté dans une mémoire non volatile de type ROM ou PROM, et peut différer d'un type d'objet à l'autre. C'est pourquoi, les données d'identification IO de l'objet peuvent également être représentatives de l'algorithme déroulé par l'objet ou, en d'autres termes, du type d'objet utilisé.

Dans ce cas, lors de la vérification des signatures, qui sera détaillée plus loin, un module spécifique de contrôle est associé à l'appareil de vérification. La structure de ce module sera détaillée plus loin, en regard de la description des étapes de vérification de signature.

L'élaboration de la donnée E, au moment de la signature, peut être effectuée de diverses manières, et dépend de l'algorithme Aa enregistré dans les circuits de traitement de l'appareil de signature.

Dans une mise en oeuvre, la donnée externe E est élaborée de façon automatique par les circuits de traitement de l'appareil 1. Il peut par exemple s'agir d'une donnée aléatoire. A cet effet, l'appareil contient alors un générateur de nombre aléatoire.

Dans un tel cas d'élaboration automatique, cette donnée externe E est inscrite parmi les informations complémentaires IC du fichier secondaire FS, pour que l'appareil de vérification puisse retrouver la clé K.

Dans une autre mise en oeuvre, la donnée externe E est fonction de, ou constituée par, la date et/ou l'heure de signature du fichier. Dans ce cas, soit la donnée E elle-même, soit des informations permettant de la recalculer au moment de la vérification de signature, c'est-à-dire des informations corrélées à la date et/ou à l'heure, sont inscrites parmi les informations complémentaires IC du fichier secondaire FS.

Dans une autre mise en oeuvre, la donnée externe E est constituée d'informations extraites du, et/ou relatives au fichier principal FP lui-même. L'emplacement et la nature de ces informations peuvent être connus par avance, ou bien ils peuvent être déterminés de façon aléatoire, par les circuits de traitement de l'appareil, au moment-même du calcul de la signature.

Ainsi, dans une variante, la donnée externe E est constituée à partir d'un nombre n déterminé d'octets choisis parmi les tous premiers octets du fichier, ou parmi les tous premiers octets de la première partie du fichier prise en compte dans le calcul de la signature.

Ce nombre n, de même que l'emplacement des octets à utiliser, peuvent être fixés une fois pour toutes. Dans ce cas, la donnée E peut très bien ne pas être reportée dans le fichier secondaire, puisque la détermination de l'algorithme Aa, par l'appareil de vérification, lui permet de déduire comment cette donnée E a été élaborée.

Dans une autre variante, la donnée externe E est corrélée au nom du fichier et/ou à son en-tête et/ou à sa taille, et/ou plus généralement à toute information tirée du fichier.

Dans une autre variante, le nombre n et/ou l'emplacement des octets à utiliser sont déterminés de façon aléatoire par l'appareil au moment de l'élaboration de la donnée externe E. Dans ce cas, soit la donnée E, soit des informations permettant de recalculer cette donnée, par exemple le nombre n et/ou l'emplacement des octets à utiliser sont inscrites parmi les informations complémentaires IC du fichier secondaire FS.

Pour résumer, lorsque la donnée externe E a été élaborée, la clé K est calculée dans le support portatif 3 du signataire, en fonction de cette donnée E et de la donnée secrète S ou Sd que ce support enferme;
- selon le cas, la donnée E, ou des informations permettant de la faire retrouver par l'appareil de vérification, sont inscrites dans le fichier secondaire FS;
- si la donnée secrète du support est une donnée diversifiée Sd, une information d'identification IO, permettant de la faire retrouver par l'appareil de vérification, est transmise du support vers l'appareil de signature, puis inscrite par ce dernier dans le fichier secondaire FS;
- la signature SG est calculée à partir de la clé K et d'une partie au moins du fichier, puis est inscrite dans le fichier secondaire;
- des informations, permettant de déterminer quelle(s) parties du fichier a (ont) servi au calcul de signature, sont inscrites dans le fichier secondaire.

Bien entendu, si plusieurs signataires interviennent, un fichier secondaire ou des enregistrements distincts sont créés pour chacun. Il en résulte que plusieurs fichiers secondaires peuvent être attachés à un même fichier principal ou que le fichier secondaire possède autant d'enregistrements que de signatures considérées.

La vérification d'une ou de plusieurs signatures peut être effectuée par l'un et/ou l'autre des signataires et/ou par des tiers, à condition qu'ils aient à disposition un dispositif agencé pour cette vérification. En fait, ce dispositif doit être similaire à celui qui a servi au calcul de chaque signature. Il peut d'ailleurs s'agir de celui-là même qui a servi à ce calcul.

L'opération de vérification consiste à recalculer chaque signature à l'aide des mêmes paramètres que ceux qui ont servi pour leur établissement, et à comparer la signature recalculée à la signature correspondante inscrite dans le fichier secondaire. Pour cela, le dispositif de vérification comporte des circuits de traitement et de comparaison.

De préférence, pour éviter qu'un fraudeur qui observerait la vérification puisse exploiter à son profit les résultats, le dispositif de vérification possède des circuits de traitement et de mémoire agencés pour qu'une signature recalculée ne soit jamais divulguée hors de ces circuits, et pour que seulement le résultat de la comparaison soit indiqué. Les données nécessaires au recalcul sont donc traitées dans une zone secrète de mémoire du dispositif de vérification, et la signature recalculée est effacée après que le résultat de la comparaison ait été indiqué.

Pour pouvoir recalculer la signature, et comme il a été indiqué plus avant, le dispositif de vérification doit être d'abord en mesure de recalculer la clé K qui a servi à obtenir la signature. Or, on rappelle que cette clé a été calculée à partir d'une donnée secrète diversifiée Sd ou non S contenue dans une zone secrète de mémoire d'un objet portatif propre au signataire.

Lorsque la donnée secrète est diversifiée, en adaptant, ainsi qu'évoqué plus avant, la méthode décrite dans les brevets susmentionnés, le dispositif peut comporter un appareil avec un module spécifique de contrôle, comportant une zone secrète de mémoire et des circuits de traitement des informations contenues dans cette zone pour évite. que ces informations sortent de ce module.

Dans une mise en oeuvre, ce module est à demeure dans l'appareil.

Dans une variante, le module est constitué par un objet portatif 4 à mémoire et microcalculateur similaire à celui utilisé par les signataires.

Dans une réalisation préférée, certains ou chacun des objets portatifs à la disposition de signataires sont utilisables en tant que modules de vérification de signature.

Ainsi, un objet permet non seulement de signer, mais aussi de vérifier toutes les signatures calculées par des cartes de la même famille, c'est-à-dire par exemple possédant des données secrètes diversifiées Sd élaborées soit à partir d'une même donnée secrète de base, soit de la façon décrite dans les brevets susmentionnés.

Dans ce cas, la donnée diversifiée d'un objet quelconque peut être recalculée ou reconstituée par certains ou chacun des objets de la même famille, afin de vérifier les signatures. Bien entendu, dans ce cas, un objet servant à la vérification ne livre jamais une signature recalculable, ni la donnée diversifiée reconstituée.

Ceci permet que n'importe qui puisse signer et vérifier avec un même objet, mais interdit qu'un signataire reproduise la signature d'un autre.

Ainsi, si on applique l'enseignement des brevets mentionnés au préambule, il suffit que la zone secrète du module de contrôle renferme les q paramètres possibles, et la lecture de l'information d'identification IO associée à une signature SG, dans le fichier secondaire, permet que le module reconstitue, dans ses circuits de traitement, en allant lire le contenu des adresses spécifiées par cette information d'identification, sans jamais la divulguer, la donnée secrète Sd de l'objet ayant servi à calculer cette signature.

Si la donnée n'est pas diversifiée, il suffit que l'appareil soit associé à un module ayant une zone secrète de mémoire dans laquelle la donnée secrète S est reproduite, et des circuits de traitement agencés pour que les données de cette zone secrète soient accessibles seulement par ces circuits de traitement. Dans une mise en oeuvre, un tel module est à demeure dans l'appareil et les circuits de traitement peuvent être ceux de l'appareil; dans une variante, le module est constitué à partir d'un objet portatif. Dans une mise en oeuvre préférée, chaque objet portatif à la disposition d'un signataire est utilisable en tant que module de vérification.

L'appareil de vérification est agencé pour retrouver la donnée externe E grâce aux informations (la donnée E elle-même, la date et/ou l'heure, etc) qui ont été inscrites à cette fin dans le fichier secondaire FS pendant la phase de signature.

Ensuite la clé K est recalculée à partir de la donnée externe E et de la donnée secrète diversifiée ou non, retrouvée grâce au module, et qui est donc sensée correspondre à celle qui avait été utilisée lors du calcul de signature. Le recalcul de cette clé K impose que la donnée secrète ne soit pas divulguée et il est donc effectué par les circuits associés à cette zone secrète, c'est-à-dire, selon le mode de réalisation, les circuits de l'appareil ou ceux d'un objet portatif.

Les circuits de traitement de l'appareil déterminent ensuite, à partir du fichier secondaire FS, quelle partie(s) du fichier principal a (ont) servi au calcul de la signature originale, et recalculent, de façon secrète, une signature SG' en prenant en compte la clé K recalculée et la (les) dite(s) partie(s) du fichier principal.

Enfin les circuits de comparaison comparent la signature recalculée SG' à celle SG lue dans le fichier secondaire, puis l'appareil indique, à la personne effectuant la vérification, seulement le résultat de la comparaison à l'aide de moyens d'affichage dont il est pourvu.

La mise en oeuvre préférée, décrite ci-avant consiste donc à faire calculer une clé K dans l'objet, puis à faire calculer la signature par les circuits de traitement de l'appareil, en fonction de cette clé K et d'au moins une partie du fichier principal FP.

Dans une variante, la signature est calculée dans l'objet, ce qui évite d'avoir à générer la donnée externe E. Dans ce cas, l'algorithme Aa enregistré dans l'appareil est tel que ses circuits de traitement gèrent et envoient en direction de l'objet chaque partie sélectionnée du fichier et éventuellement un ou plusieurs autres paramètres qu'il convient de prendre en compte, tels la date et/ou l'heure et /ou le nom et la taille, etc, les circuits de l'objet restituant en fin de compte la signature SG qui est fonction des parties du fichier et des autres paramètres qu'ils ont reçus de l'appareil, puis transmettant cette signature vers l'appareil pour qu'il l'inscrive dans le fichier secondaire FS. On aboutit donc à un résultat comparable mais ne nécessitant aucun transfert de clés vers l'appareil. Par ailleurs, si un ou plusieurs autres paramètres sont pris en compte, des informations permettant de les retrouver doivent être inscrites dans le fichier secondaire.

Dans ce cas de calcul de signature par l'objet, on conçoit que les circuits de l'appareil ont des fonctions élémentaires. L'algorithme Aa mémorisé dans l'appareil est réduit à un minimum permettant les échanges avec l'objet et avec les fichiers contenus dans ses mémoires de masse.

Cependant cette variante nécessite l'emploi d'objets portatifs ayant des possibilités de calcul et des algorithmes plus poussées que dans le mode préféré. En effet, le mode préféré décrit auparavant nécessite simplement que les circuits de traitement de l'objet soient en mesure de fournir, en réponse à un ordre entrant, un résultat qui est fonction de la donnée secrète S ou Sd qu'ils contiennent et d'une donnée externe.

La réalisation matérielle et logicielle de l'invention est à la portée de l'homme du métier sans qu'il soit nécessaire de la détailler davantage.

La ou les signatures d'un fichier principal FP peuvent être vérifiées alors que le fichier principal et son ou ses fichiers secondaires FS sont sur le même appareil que celui qui a servi au calcul, ou après que le fichier principal et son ou ses fichiers secondaires FS aient été transférés sur un appareil différent.

Le transfert ne fait pas l'objet de la présente invention. Il peut s'effectuer par n'importe quel moyen ou procédé connu: il peut s'agir d'un transfert électronique par ligne de données, d'un transfert à l'aide d'un support matériel tel qu'une disquette, ou de tout autre type de transfert de données. Il convient bien évidemment que le fichier principal et le ou les fichiers secondaires associés soient transférés sur un appareil en mesure d'effectuer les vérifications de signature si on veut y réaliser cette opération, c'est-à-dire un appareil qui possède en particulier une structure logicielle appropriée.

Pour que l'invention soit facilement mise en oeuvre, il est préférable de réaliser un système permettant un dialogue aisé, c'est-à-dire ergonomique et convivial en particulier, avec l'utilisateur du système, qu'il soit signataire ou vérificateur de signature.

C'est pourquoi, de préférence, l'invention est mise en oeuvre sur un matériel de traitement de fichiers permettant l'utilisation de fenêtres de dialogue, telles que celles qui fonctionnent sous l'environnement "WINDOWS" de la société MICROSOFT.

La figure 2 illustre une fenêtre élémentaire de dialogue qui peut s'ouvrir pour lancer soit le calcul soit la vérification de(s) signature(s) attachée(s) à un fichier.

Le titre 8 de l'application apparait dans une barre 9 de titre en haut de fenêtre, et les menus disponibles dans une barre 10 de menus.

Un premier menu "MODE" permet de choisir soit le mode "signature", soit le mode "vérification de signature".

Un second menu "FICHIER" permet de sélectionner n'importe quel type de fichier contenu dans une mémoire de l'appareil et que l'utilisateur souhaite signer ou dont il désire vérifier la ou les signatures. Il peut donc s'agir de fichiers de texte, de données, de dessins, etc...

Un troisième menu "SELECTION", est accessible au moins quand le mode "signature" est actif. Il permet d'accéder soit à une fonction "sélection manuelle" soit à une fonction "sélection automatique" qui seront détaillées plus loin.

Un quatrième menu "OPTIONS" permet par exemple de choisir un support ayant déjà servi à une signature ou de fixer les caractéristiques d'un nouveau support. Ces notions seront détaillées plus loin.

Enfin, un menu aide "?" peut être présent.

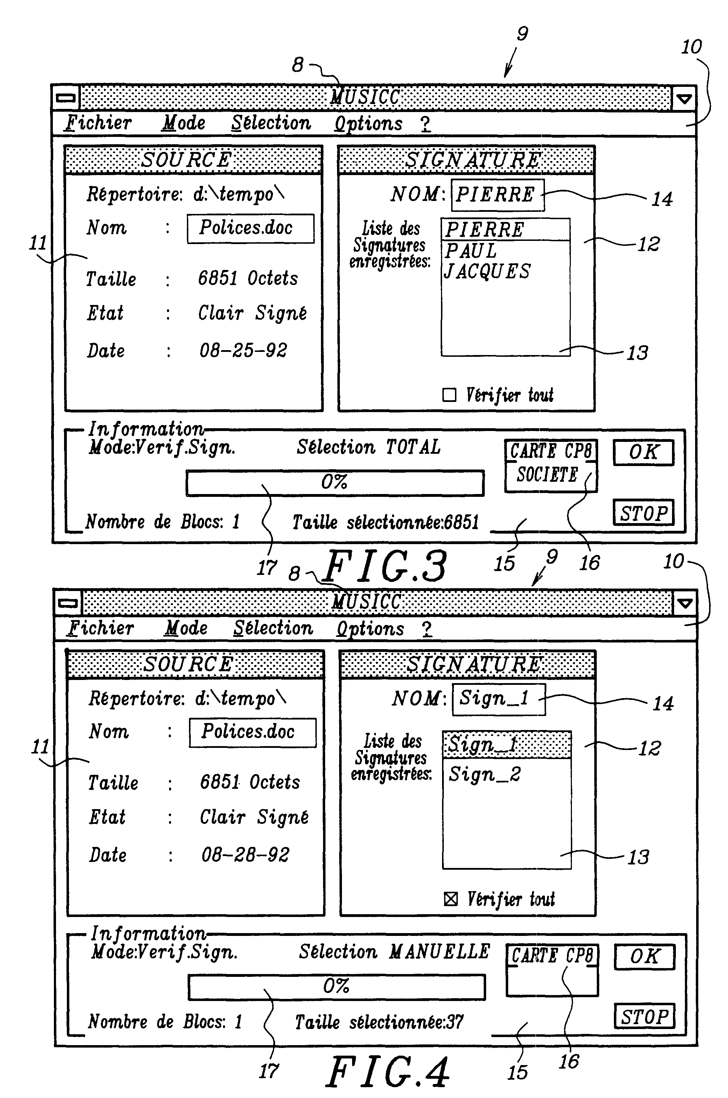

Les figures 3 et 4 illustrent deux variantes de fenêtres qui peuvent s'ouvrir lorsqu'un fichier a été activé par le menu "FICHIER", et que le mode vérification de signature a été activé par le menu "MODE". Ces variantes comportent seulement des différences minimes, qui seront mises en évidence chaque fois que nécessaire.

De préférence, lorsque le mode vérification a été activé, il n'est pas nécessaire que le menu "SELECTION" soit accessible. Par contre les menus "FICHIER" et "MODE" doivent être accessibles.

Un premier cadre "SOURCE" 11 apparait qui contient des informations sur l'état du fichier validé, et indique son nom, s'il est signé ou non, sa taille, la date du fichier, le répertoire dans lequel il est rangé.

Par ailleurs un second cadre "SIGNATURE" 12 indique le nombre et/ou le nom des signatures éventuellement associées à ce fichier.

Sur la variante de la figure 3, chacune des signatures de ce second cadre 12 est repérée par un nom indiqué dans une première zone 13, ici "Pierre", "Paul", etc, alors que dans la variante de la figure 4, chacune des signatures de ce second cadre 12 est repérée par un numéro d'ordre "Sign 1", "Sign 2" donné par défaut par l'appareil, et indiqué dans la première zone 13.

Une seconde zone 14, indique la signature active par son nom (figure 3) ou son numéro (figure 4).

Dans un troisième cadre "INFORMATION" 15 de la figure 3, il apparaît une mention "sélection totale" indiquant que la signature "Pierre", en cours de vérification, avait été calculée sur la base de la totalité du fichier. Dans le cadre correspondant de la figure 4, il apparait une mention "sélection manuelle" indiquant que la signature "Sign 1", en cours de vérification, a été calculée sur la base d'une partie du fichier.

De plus, il est indiqué dans une zone 16 de ce troisième cadre 15 le nom du support qui avait été utilisé pour le calcul de la signature en cours de vérification.

Des boutons "OK" ou "STOP", accessibles par exemple grâce à un pointeur déplacé par une souris ou par le clavier 6A, sont placés dans ce cadre 15. Ils permettent le lancement ou l'arrêt de la vérification.

Dans une autre zone 17 de ce cadre 15, le pourcentage d'avancement du calcul de vérification apparait après que le lancement de la vérification ait été validé par le bouton "OK". En outre, la zone 17 permet d'afficher une barre dont la longueur indique l'état d'avancement.

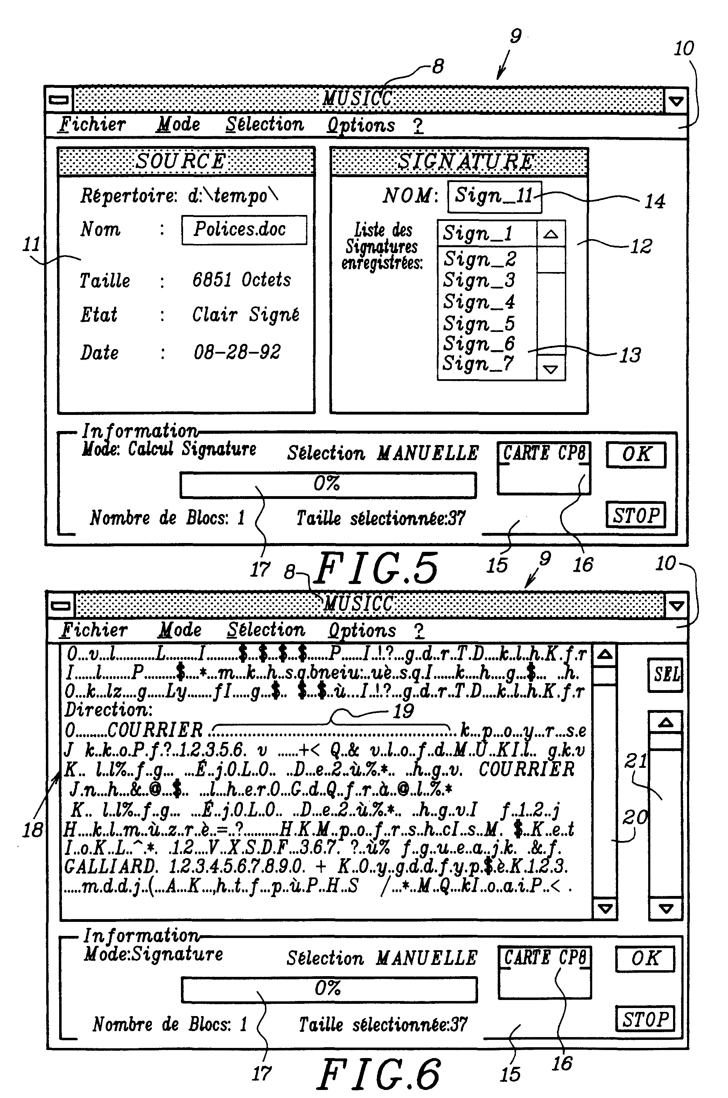

Des fenêtres susceptibles de s'ouvrir pendant la création ou l'ajout d'une signature sont représentées aux figures 5 et 6. Le choix du mode "signature" s'effectue à partir du menu "MODE", qui est accessible au lancement de l'application ou à partir du mode "vérification" ou, bien entendu, lorsque le mode "signature" lui-même a été validé.

De préférence, lorsque le mode "signature" est activé, la sélection totale du fichier est faite par défaut, c'est-à-dire que la signature sera calculée à partir de tout le fichier. Cependant, la sélection manuelle d'une ou de plusieurs parties du fichier peut être effectuée comme il sera expliqué plus loin.

L'activation du mode "signature" rend accessible l'ensemble des menus.

La figure 5 illustre une fenêtre qui s'ouvre lorsque le mode "signature" et la sélection manuelle ont été activés.

La fenêtre ouverte est similaire à celle des figures 3 ou 4, à ceci près que, dans le cadre 15 d'information, il est indiqué que le mode actif est celui du calcul de signature, et la mention "sélection manuelle" apparait en clair.

Il convient de noter que si la sélection est faite par défaut, s'ouvre une fenêtre, non représentée sur les figures, qui présente une seule différence d'aspect avec celle de la figure 5: dans le cadre 15 d'information, il apparait la mention "sélection totale" au lieu de "sélection manuelle".

De plus, le nom et des informations relatives au fichier en cours de signature apparaissent dans le premier cadre "SOURCE" et le nom ou le numéro de la signature en cours apparaissent dans la seconde zone 14 du second cadre 12.

Enfin, s'inscrit dans la zone 16 spécifique du troisième cadre 15 le nom du support qui est utilisé pour le calcul de la signature en cours.

Dans une mise en oeuvre préférée, une action sur le bouton "OK" du cadre 15 d'information entraîne le lancement du calcul de signature, lorsque la sélection totale a été choisie, volontairement ou par défaut.

Par contre, dans cette mise en oeuvre préférée, la sélection manuelle entraîne l'ouverture de la fenêtre représentée sur la figure 6, qui permet d'afficher le contenu du fichier et d'en sélectionner certaines zones grâce à un curseur, connu en soi, tel qu'un curseur déplacé par une souris ou des touches du clavier 6A de l'appareil de traitement.

Les cadres "SOURCE" et "SIGNATURE" qui apparaissent dans les fenêtres précédentes sont remplacés par un cadre unique 18 dans lequel le contenu du fichier est affiché, alors que le cadre 15 "INFORMATION" demeure présent.

La sélection d'une ou de plusieurs parties du fichier peut être effectuée manuellement à l'aide d'un curseur déplacé par une souris ou par des touches du clavier. L'exemple de cette figure 6 montre la sélection d'une partie, encore appelée bloc, unique 19 d'un fichier de texte constituée de 37 octets. Le cadre d'information indique le nombre de blocs et le nombre total d'octets sélectionnés.

Cette fenêtre peut comporter un ou plusieurs sélecteurs linéaires 20, 21, connus en soi, pour déplacer le fichier par rapport à l'écran afin de donner la possibilité de rechercher des parties distinctes du fichier. Un premier sélecteur 20 permet par exemple le déplacement dans la page courante, et un second 21 le déplacement de page en page.

Enfin, une action sur le bouton "OK" valide la sélection et lance le calcul de signature.

Le menu "OPTIONS" permet de spécifier au système les caractéristiques d'un nouveau support, par exemple lors d'une signature, ou de rechercher les caractéristiques d'un support déjà spécifié lors d'une vérification.

Ainsi, il doit être validé par un nouveau signataire qui désire spécifier au système quel type de carte il utilise pour la signature.

Si un nouveau signataire utilise un support, tel qu'une carte, dont les caractéristiques ont déjà été rentrées par un autre, c'est par ce menu qu'il le spécifie.

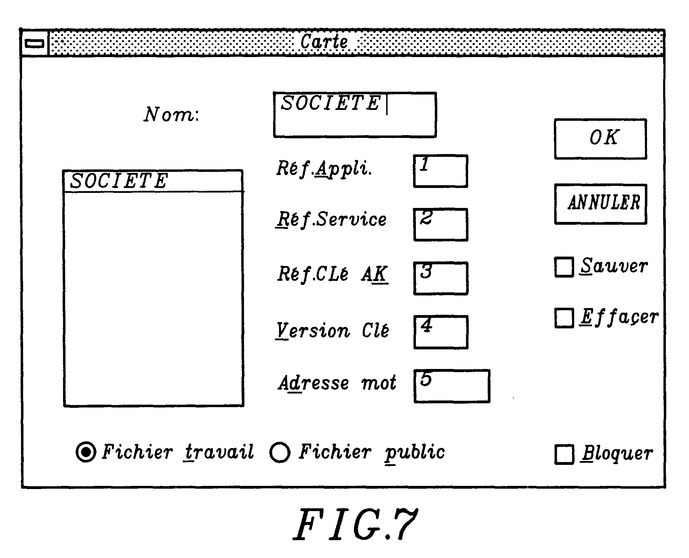

Sa validation entraîne l'ouverture d'une fenêtre "CARTE" conforme à celle de la figure 7. Elle contient des cases permettant de saisir divers paramètres de définition d'un nouveau support utilisé pour le calcul d'une nouvelle signature. C'est grâce à ce menu que des supports contenant des algorithmes différents et/ou des clés diversifiées différemment pourront être identifiés lors du calcul et qu'une vérification ultérieure pourra avoir lieu.

Ainsi, on peut indiquer, entre autres, grâce à ce menu, les applications "Ref Appli" (traitement de texte, tableur, ...) auxquelles le support considéré permet d'accéder. De plus, on peut identifier précisément le type de support dont il s'agit et les versions de clés ("Réf clé", "version clé") qu'il contient, pour que le système puisse fonctionner correctement. Plus généralement, ce menu permet de spécifier au système tous les paramètres nécessaires relatifs à un support, afin d'en disposer pour le calcul et la vérification.

## Revendications

1. Procédé de signature d'un fichier principal (FP) informatique par une personne, du genre consistant à faire calculer, par des circuits d'un dispositif (1,3,4) de traitement de l'information, au moins une signature (SG) du fichier, en utilisant un algorithme de signature (Aa, Ao) et en prenant en compte au moins une donnée secrète (S; Sd) propre au signataire, mais inconnue de celui-ci, mémorisée dans une zone de mémoire secrète d'un objet portatif électronique (4), à mémoire et circuits de traitement, à la disposition de ce signataire, et à lier la signature calculée au fichier principal, **caractérisé en ce que**, lors du calcul de chaque signature, il consiste en outre à :
- sélectionner au moins une partie choisie (19) du fichier principal sur laquelle le signataire désire faire porter sa signature, de sorte que la signature est fonction de la donnée secrète du signataire et de chaque partie sélectionnée du fichier ;
- créer un fichier secondaire (FS) et y inscrire au moins des informations (IN) permettant d'identifier chaque partie du fichier principal ayant servi au calcul de cette signature ; et
- lier le fichier secondaire d'une part à la signature correspondante et d'autre part au fichier signé.

2. Procédé selon la revendication 1, comprenant l'étape consistant à enregistrer, dans le dit fichier secondaire (FS), une information d'algorithme (IC) définissant un type d'algorithme de signature utilisé pour calculer la dite signature.

3. Procédé selon la revendication 1 comprenant l'étape consistant à enregistrer, dans le dit fichier secondaire (FS), une information d'objet portatif (IO) définissant un type d'objet portatif utilisé pour calculer la dite signature.

4. Procédé selon la revendication 1, incluant l'étape consistant à faire signer le fichier principal (FP) par une pluralité de signataires ayant des données secrètes différentes (S,Sd), situées respectivement dans des objets portatifs (4) différents, au moyen des étapes suivantes :
- sélectionner dans le fichier principal, autant de parties de fichiers choisies (19) que de signataires, sur lesquelles les signataires respectifs ont l'intention de calculer leur signature ;
- calculer chaque signature en utilisant un dispositif de traitement de l'information (1) incorporant un algorithme de signature et exécutant un calcul avec cet algorithme sur la base de la dite donnée secrète respective des signataires, prélevée dans l'objet portatif correspondant et sur la base de la partie de fichier choisie correspondante, pour obtenir un résultat définissant chaque signature ;
- utiliser un fichier secondaire (FS) pour enregistrer une information d'identification de fichier (IN) identifiant dans le fichier principal, toutes les parties de fichier choisies qui ont été utilisées pour calculer la signature ; et
- lier le fichier principal, les signatures et le fichier secondaire.

5. Procédé selon la revendication 1, dans lequel le calcul de signatures comprend les étapes consistant à :
- prévoir un premier algorithme de signature (Aa) dans le dispositif de traitement de l'information ;
- prévoir un second algorithme de calcul de clé (Ao) dans l'objet portatif ;
- produire et transmettre une donnée variable (E) depuis les circuits du dispositif de traitement vers les circuits de l'objet ;
- calculer une clé (K) dans les circuits de l'objet en exécutant le second algorithme de clé dans les circuits de l'objet et en utilisant la donnée variable et la donnée secrète ;
- transmettre la clé depuis les circuits de l'objet vers les circuits du dispositif de traitement ;
- calculer la signature en exécutant le premier algorithme de signature dans les circuits du dispositif de traitement en utilisant la clé et la dite partie de fichier choisie (19) ; et
- enregistrer la donnée variable dans le fichier secondaire (FS).

6. Procédé selon la revendication 1,dans lequel le calcul de signatures comprend les étapes consistant à :
- exécuter l'algorithme de signature (Ao) dans l'objet portatif ;
- transmettre la partie de fichier choisie (19) depuis les circuits du dispositif de traitement vers les circuits de l'objet ; et
- calculer la signature en utilisant cette partie de fichier choisie et la donnée secrète en exécutant l'algorithme de signature dans les circuits de l'objet .

7. Procédé selon la revendication 1, consistant en outre à vérifier la signature liée avec le fichier principal, l'étape de vérification de la signature comprenant les étapes consistant à :
- identifier la partie de fichier choisie (19) dans le fichier principal (FP) en utilisant la dite information d'identification de fichier (IN) dans le fichier secondaire (FS) ;
- utiliser un dispositif de traitement de l'information (1) incorporant le dit algorithme de signature et, dans une zone de mémoire secrète, la dite donnée secrète (S,Sd) ;
- recalculer la signature dans le dispositif en exécutant un calcul avec l'algorithme de signature, basé sur la donnée secrète de la zone de mémoire secrète et sur la partie de fichier choisie identifiée, et prenant en compte tout autre information enregistrée préalablement dans le fichier secondaire pour calculer la signature, le résultat de ce calcul constituant la signature recalculée;
- comparer la signature recalculée avec la signature (SG) liée au fichier principal ; et
- indiquer un résultat de la comparaison sans révéler la signature recalculée.

8. Appareil pour permettre à une personne de signer un fichier informatique principal (FP), pour la mise en oeuvre du procédé selon l'une quelconque des revendications 1 à 11, incluant :
- un objet portatif (4) ayant une mémoire et des circuits de traitement, le dit objet portatif étant dédié à un signataire et à la disposition de celui-ci, et une zone secrète de cette mémoire mémorisant une donnée secrète (S,Sd) qui est spécifique d'une identité d'au moins un signataire ;
- des moyens de traitement de l'information (1) ;
- des moyens pour calculer une signature (SG) en utilisant un algorithme de signature (Aa,Ao) et en exécutant un calcul avec cet algorithme, basé sur la donnée secrète de l'objet portatif et sur le fichier, un résultat de ce calcul constituant la dite signature ;
**caractérisé en ce qu'**il comprend en outre :
- des moyens (6) pour afficher le contenu du fichier principal ;
- des moyens pour permettre au signataire de sélectionner dans le fichier principal une partie de fichier choisie (19) de sorte que ladite signature (SG) est basée sur cette partie ;
- des moyens pour utiliser un fichier secondaire (FS) pour enregistrer une information d'identification de fichier (IN) identifiant dans le fichier principal la dite partie de fichier choisie utilisée pour calculer la signature ; et
- des moyens pour lier le fichier principal, la signature et le fichier secondaire.

9. Appareil selon la revendication 8, comprenant en outre :
- des moyens (13) pour afficher un nom ou un rang d'une signature déjà liée à un fichier ;
- des moyens pour sélectionner au moins une signature à vérifier ; et
- des moyens (14) pour afficher le rang ou le nom d'une signature dont le calcul ou la vérification est en cours.

10. Appareil selon la revendication 8, comprenant des moyens pour spécifier aux moyens de traitement de l'information (1) des caractéristiques (IO) de l'objet portatif qui est utilisé pour une signature dont le calcul est en cours, ou qui a été utilisé pour une signature dont la vérification est en cours.

11. Appareil selon la revendication 8, comprenant un dispositif de vérification associé à un module de vérification agencé pour retrouver et/ou recalculer des paramètres utilisés pour calculer la signature, ces paramètres étant différents desdites parties (19) du fichier principal (FP) utilisées pour calculer la signature, sans révéler lesdits paramètres.

12. Appareil selon la revendication 8, dans lequel le module est un objet portatif électronique (4) ayant une mémoire et des circuits de traitement, le dit objet portatif étant capable de se connecter au dispositif de vérification.

13. Appareil selon la revendication 12 dans lequel les objets portatifs électroniques (4) à disposition des signataires sont adaptés pour inclure ledit module de vérification, les objets servant à la fois pour signer les fichiers et pour vérifier les signatures calculées, en utilisant une donnée non diversifiée ou diversifiée.

## Claims

1. Method for signature of a main computer file (FP) by a person, of the type consisting in having at least one signature (SG) of the file calculated by circuits of an information processing device (1, 3, 4), using a signature algorithm (Aa, Ao) and taking account of at least one secret data item (S; Sd) specific to the signatory, but unknown to him, stored in a secret memory zone of a portable electronic object (4), with a memory and processing circuits, available to that signatory, and in linking the calculated signature to the main file, **characterised in that**, when each signature is calculated, it further consists in:
- selecting at least one chosen portion (19) of the main file to which the signatory wishes to attach his signature, so that the signature is a function of the secret data item of the signatory and of each chosen portion of the file;
- creating a secondary file (FS) and recording therein at least some information (IN) allowing the identification of each portion of the main file that was used in calculating this signature; and
- linking the secondary file on the one hand to the corresponding signature and on the other hand to the signed file.

2. Method according to Claim 1, comprising the step consisting in recording, in said secondary file (FS), a piece of algorithm information (IC) defining a type of signature algorithm used for calculating said signature.

3. Method according to Claim 1 comprising the step consisting in recording, in said secondary file (FS), a piece of portable object information (10) defining a type of portable object used for calcullating said signature.

4. Method according to Claim 1, including the step consisting in having the main file (FP) signed by a plurality of signatories having different secret data items (S, Sd), located respectively in different portable objects (4), by means of the following steps:
- selecting from the main file as many chosen file portions (19) as there are signatories, for which the respective signatories intend to calculate their signature;
- calculating each signature by using an information processing device (1) incorporating a signature algorithm and executing a calculation with this algorithm on the basis of said respective secret data item of the signatories, taken from the corresponding portable object and on the basis of the corresponding chosen file portion, in order to obtain a result defining each signature;
- using a secondary file (FS) to record a piece of file identification information (IN) identifying, in the main file, all the chosen file portions that have been used to calculate the signature; and
- linking the main file, the signatures and the secondary file.

5. Method according to Claim 1, in which the calculation of signatures comprises the steps consisting in:
- providing a first signature algorithm (Aa) in the information processing device;
- providing a second key calculation algorithm (Ao) in the portable object;
- producing and transmitting a variable data item (E) from the circuits of the processing device to the circuits of the object;
- calculating a key (K) in the circuits of the object by executing the second key algorithm in the circuits of the object and by using the variable data item and the secret data item;
- transmitting the key from the circuits of the object to the circuits of the processing device;
- calculating the signature by executing the first signature algorithm in the circuits of the processing device and using the key and said chosen file portion (19); and
- recording the variable data item in the secondary file (FS).

6. Method according to Claim 1, in which the calculation of signatures comprises the steps consisting in:
- executing the signature algorithm (Ao) in the portable object;
- transmitting the chosen file portion (19) from the circuits of the processing device to the circuits of the object; and
- calculating the signature by using this chosen file portion and the secret data item by executing the signature algorithm in the circuits of the object.

7. Method according to Claim 1, further consisting in verifying the signature linked with the main file, the signature verification step comprising the steps consisting in:
- identifying the chosen file portion (19) within the main file (FP) by using said file identification information (IN) in the secondary file (FS);
- using an information processing device (1) incorporating said signature algorithm and, in a secret memory zone, said secret data item (S, Sd);
- recalculating the signature in the device by executing a calculation with the signature algorithm, based on the secret data item in the secret memory zone and on the identified chosen file portion, and taking account of any other information previously recorded in the secondary file in order to calculate the signature, the result of the calculation constituting the recalculated signature;
- comparing the recalculated signature with the signature (SG) linked to the main file; and
- indicating a result of the comparison without revealing the recalculated signature.

8. Apparatus for allowing a person to sign a main computer file (FP), for the implementation of the method according to any one of Claims 1 to 11, including:
- a portable object (4) having a memory and processing circuits, said portable object being dedicated to one signatory and available to him, and a secret zone of this memory storing a secret data item (S, Sd) that is specific to an identify of at least one signatory;
- information processing means (1);
- means for calculating a signature (SG) by using a signature algorithm (Aa, Ao) and by executing a calculation with this algorithm, based on the secret data item of the portable object and on the file, a result of this calculation constituting said signature;
**characterised in that** it further comprises:
- means (6) for displaying the content of the main file;
- means for allowing the signatory to select from the main file a chosen file portion (19) so that said signature (SG) is based on that portion;
- means for using a secondary file (FS) for recording a piece of file identification information (IN) identifying within the main file said chosen file portion used for calculating the signature; and
- means for linking the main file, the signature and the secondary file.

9. Apparatus according to Claim 8, further comprising:
- means (13) for displaying a name or a rank of a signature already linked to a file;
- means for selecting at least one signature to be verified; and
- means (14) for displaying the rank or the name of a signature for which calculation or verification is in progress.

10. Apparatus according to Claim 8, comprising means for specifying to the information processing means (1) the characteristics (IO) of the portable object that is used for a signature for which calculation is in progress, or that has been used for a signature for which verification is in progress.

11. Apparatus according to Claim 8, comprising a verification device associated with a verification module arranged so as to find and/or recalculate the parameters used for calculating the signature, these parameters being different from said portions (19) of the main file (FP) used for calculating the signature, without revealing said parameters.

12. Apparatus according to Claim 8, in which the module is a portable electronic object (4) having a memory and processing circuits, said portable object being capable of connecting to the verification device.

13. Apparatus according to Claim 12 in which the portable electronic objects (4) available to the signatories are adapted so as to include said verification module, the objects serving both for signing the files and for verifying the calculated signatures, using a non-diversified or diversified data item.

## Patentansprüche

1. Verfahren zum Unterzeichnen einer datentechnischen Hauptdatei (FP) durch eine Person, wobei das Verfahren von der Art ist, die darin besteht, durch Schaltungen einer Datenverarbeitungsvorrichtung (1, 3, 4) wenigstens eine Signatur (SG) der Datei zu berechnen, indem ein Signaturalgorithmus (Aa, Ao) verwendet wird und indem wenigstens eine persönliche Dateneinheit (S; Sd) des Unterzeichners berücksichtigt wird, die diesem jedoch unbekannt ist und in einer geheimen Speicherzone eines diesem Unterzeichner zur Verfügung stehenden tragbaren elektronischen Gegenstandes (4) mit Speicher und Verarbeitungsschaltungen gespeichert ist, und darin besteht, die berechnete Signatur mit der Hauptdatei zu verbinden, **dadurch gekennzeichnet, daß** es bei der Berechnung jeder Signatur außerdem darin besteht:
- wenigstens einen ausgesuchten Teil (19) der Hauptdatei auszuwählen, in dem der Unterzeichner seine Signatur mitführen möchte, so daß die Signatur von der geheimen Dateneinheit des Unterzeichners und von jedem ausgewählten Teil der Datei abhängt;
- eine Hilfsdatei (FS) zu erzeugen und in diese wenigstens Informationen (IN) zu schreiben, die die Identifizierung jedes Teils der Hauptdatei ermöglichen, der der Berechnung dieser Signatur gedient hat; und
- die Hilfsdatei einerseits mit der entsprechenden Signatur und andererseits mit der unterzeichneten Datei zu verbinden.

2. Verfahren nach Anspruch 1, das den Schritt umfaßt, der darin besteht, in die Hilfsdatei (FS) Algorithmusinformationen (IC) einzutragen, die einen Typ eines Signaturalgorithmus definieren, der verwendet wird, um die Signatur zu berechnen.

3. Verfahren nach Anspruch 1, das den Schritt umfaßt, der darin besteht, in die genannte Hilfsdatei (FS) Informationen (IO) über den tragbaren Gegenstand einzutragen, die einen Typ eines tragbaren Gegenstandes definieren, der für die Berechnung der Signatur verwendet wird.

4. Verfahren nach Anspruch 1, das den Schritt umfaßt, der darin besteht, die Hauptdatei (FP) durch mehrere Unterzeichner zu unterzeichnen, die unterschiedliche geheime Dateneinheiten (S, Sd) besitzen, die sich jeweils in unterschiedlichen tragbaren Gegenständen (4) befinden, mittels der folgenden Schritte:
- Auswählen so vieler ausgesuchter Dateiteile (19), wie Unterzeichner vorhanden sind, in denen die jeweiligen Unterzeichner ihre Signatur berechnen möchten, in der Hauptdatei;
- Berechnen jeder Signatur, indem eine einen Signaturalgorithmus enthaltende Datenverarbeitungsvorrichtung (1) verwendet wird und indem eine Berechnung mit diesem Algorithmus auf der Grundlage der entsprechenden geheimen Dateneinheit der Unterzeichner, die in dem entsprechenden tragbaren Gegenstand abgerufen wird, und auf der Grundlage des entsprechenden ausgesuchten Dateiteils ausgeführt wird, um ein jede Signatur definierendes Resultat zu erhalten;
- Verwenden einer Hilfsdatei (FS), um Datei-Identifizierungsinformationen (IN) aufzuzeichnen, die in der Hauptdatei alle ausgesuchten Dateiteile identifizieren, die für die Berechnung der Signatur verwendet worden sind; und
- Verbinden der Hauptdatei, der Signaturen und der Hilfsdatei.

5. Verfahren nach Anspruch 1, bei dem die Berechnung der Signaturen die Schritte umfaßt, die darin bestehen:
- einen ersten Signaturalgorithmus (Aa) in der Datenverarbeitungsvorrichtung vorzusehen;
- einen zweiten Schlüsselberechnungsalgorithmus (Ao) im tragbaren Gegenstand vorzusehen;
- eine variable Dateneinheit (E) zu erzeugen und von den Schaltungen der Verarbeitungsvorrichtung an die Schaltungen des Gegenstandes zu übertragen;
- einen Schlüssel (K) in den Schaltungen des Gegenstandes zu berechnen, indem der zweite Schlüsselalgorithmus in den Schaltungen des Gegenstandes ausgeführt wird und indem die variable Dateneinheit und die geheime Dateneinheit verwendet werden;
- den Schlüssel von den Schaltungen des Gegenstandes an die Schaltungen der Verarbeitungsvorrichtung zu übertragen;
- die Signatur zu berechnen, indem der erste Signaturalgorithmus in den Schaltungen der Verarbeitungsvorrichtung ausgeführt wird, wobei der Schlüssel des ausgesuchten Dateiteils (19) verwendet wird; und
- die variable Dateneinheit in die Hilfsdatei (FS) zu schreiben.

6. Verfahren nach Anspruch 1, bei dem die Berechnung der Signaturen die Schritte umfaßt, die darin bestehen:
- den Signaturalgorithmus (Ao) in dem tragbaren Gegenstand auszuführen;
- den ausgesuchten Dateiteil (19) von den Schaltungen der Verarbeitungsvorrichtung an die Schaltungen des Gegenstandes zu übertragen; und
- die Signatur zu berechnen, indem dieser ausgesuchte Dateiteil und die geheime Dateneinheit verwendet werden und indem der Signaturalgorithmus in den Schaltungen des Gegenstandes ausgeführt wird.

7. Verfahren nach Anspruch 1, das außerdem darin besteht, die mit der Hauptdatei verbundene Signatur zu verifizieren, wobei der Schritt des Verifizierens der Signatur die Schritte umfaßt, die darin bestehen:
- den ausgesuchten Dateiteil (19) in der Hauptdatei (FP) zu identifizieren, indem die genannten Datei-Identifizierungsinformationen (IN) in der Hilfsdatei (FS) verwendet werden;
- eine Datenverarbeitungsvorrichtung (1) zu verwenden, die den Signaturalgorithmus und in einer geheimen Speicherzone die geheime Dateneinheit (S, Sd) enthält;
- die Signatur in der Vorrichtung erneut zu berechnen, indem eine Berechnung mit dem Signaturalgorithmus auf der Grundlage der geheimen Dateneinheit in der geheimen Speicherzone und des identifizierten ausgesuchten Dateiteils ausgeführt wird, indem alle weiteren Informationen berücksichtigt werden, die vorher in die Hilfsdatei geschrieben worden sind, um die Signatur zu berechnen, wobei das Resultat dieser Berechnung die erneut berechnete Signatur bildet;
- die erneut berechnete Signatur mit der mit der Hauptdatei verbundenen Signatur (SG) zu vergleichen; und
- ein Vergleichsergebnis anzugeben, ohne die erneut berechnete Signatur preiszugeben.

8. Vorrichtung, die einer Person ermöglicht, eine datentechnische Hauptdatei (FP) zu unterzeichnen, und der Ausführung des Verfahrens nach einem der Ansprüche 1 bis 11 dient, mit:
- einem tragbaren Gegenstand (4), der einen Speicher und Verarbeitungsschaltungen besitzt, wobei der tragbare Gegenstand einem Unterzeichner zugeordnet ist und diesem zur Verfügung steht und wobei eine geheime Zone dieses Speichers eine geheime Dateneinheit (S, Sd) speichert, die für eine Identität wenigstens eines Unterzeichners spezifisch ist;
- Datenverarbeitungsmitteln (1);
- Mitteln zum Berechnen einer Signatur (SG), indem ein Signaturalgorithmus (Aa, Ao) verwendet wird und indem eine Berechnung mit diesem Algorithmus auf der Grundlage der geheimen Dateneinheit des tragbaren Gegenstandes und auf der Grundlage der Datei ausgeführt wird, wobei ein Resultat dieser Berechnung die Signatur bildet;
**dadurch gekennzeichnet, daß** sie außerdem umfaßt:
- Mittel (6) zum Anzeigen des Inhaltes der Hauptdatei;
- Mittel, die dem Unterzeichner ermöglichen, in der Hauptdatei einen ausgesuchten Dateiteil (19) auszuwählen, derart, daß die Signatur (SG) auf diesem Teil basiert;
- Mittel zum Verwenden einer Hilfsdatei (FS), um Datei-Identifizierungsinformationen (IN) aufzuzeichnen, die in der Hauptdatei den ausgesuchten Dateiteil, der für die Berechnung der Signatur verwendet wird, identifizieren; und
- Mittel, die die Hauptdatei, die Signatur und die Hilfsdatei verbinden.

9. Vorrichtung nach Anspruch 8, die außerdem umfaßt:
- Mittel (13) zum Anzeigen eines Namens oder eines Rangs einer Signatur, die bereits mit einer Datei verbunden ist;
- Mittel zum Auswählen wenigstens einer zu verifizierenden Signatur; und
- Mittel (14) zum Anzeigen des Rangs oder des Namens einer Signatur, deren Berechnung oder deren Verifizierung momentan erfolgt.

10. Vorrichtung nach Anspruch 8, die Mittel umfaßt, die für die Datenverarbeitungsmittel (1) Merkmale (IO) des tragbaren Gegenstandes spezifizieren, der für eine Signatur verwendet wird, deren Berechnung momentan erfolgt, oder der für eine Signatur verwendet worden ist, deren Verifikation momentan erfolgt.

11. Vorrichtung nach Anspruch 8, die eine Verifikationsvorrichtung umfaßt, der ein Verifikationsmodul zugeordnet ist, das so beschaffen ist, daß es für die Berechnung der Signatur verwendete Parameter ohne deren Preisgabe wiedergewinnt und/oder erneut berechnet, wobei diese Parameter von den Teilen (19) der Hauptdatei (FP), die für die Berechnung der Signatur verwendet werden, verschieden sind.

12. Vorrichtung nach Anspruch 8, in der das Modul ein tragbarer elektronischer Gegenstand (4) ist, der einen Speicher und Verarbeitungsschaltungen besitzt, wobei der tragbare Gegenstand mit der Verifikationsvorrichtung verbunden werden kann.

13. Vorrichtung nach Anspruch 12, in der die tragbaren elektronischen Gegenstände (4), die den Unterzeichnern zur Verfügung stehen, so beschaffen sind, daß sie das Verifikationsmodul enthalten können, wobei die Gegenstände zugleich der Unterzeichnung der Dateien und der Verifikation der berechneten Signaturen dienen, indem eine nicht diversifizierte oder eine diversifizierte Dateneinheit verwendet wird.
